# EUROPEAN PATENT APPLICATION

(11) **EP 3 260 398 A1**
(43) Date of publication of application: **27.12.2017**
(21) Application number: 17175140.7
(22) Date of filing: 09.06.2017
(51) Int. Cl.: B65G 47/82, B25J 5/04, B25J 9/10

(54) **DEVICE FOR HANDLING OBJECTS**

(30) Priority: 21.06.2016 IT UA20164565
(71) Applicant: BDF Industries S.p.A., 36100 Vicenza (IT)
(72) Inventor: DALLA FONTANA, Oscar, 36057 Arcugnano (VI) (IT); DALLA FONTANA, Adamo, 36057 Arcugnano (VI) (IT)
(74) Representative: Ziliotto, Tiziano

(57) **Abstract**

The present invention concerns a device for handling objects, comprising: a fixed supporting structure (2520), a first carriage (2530) connected in a movable manner along a first linear direction (X) and/or a second carriage (2540) connected in a movable manner along a second linear direction (Z). A third carriage (2550) is connected in a movable manner along a curved direction, wherein the third carriage (2550) is connected between the fixed supporting structure (2520) and the first carriage (2530), or between the first carriage (2530) and the second carriage (2540), or to the second carriage (2540).

## Description

### TECHNICAL FIELD OF THE INVENTION

The present invention concerns a device for handling objects such as, for example, a device for handling bottles, also known as stacker or lehr loader.

### DESCRIPTION OF THE STATE OF THE ART

In the systems for the production of hollow glass objects, for example bottles, after the forming process the objects are subjected to a thermal stress relieving treatment for the purpose of reducing internal stress.

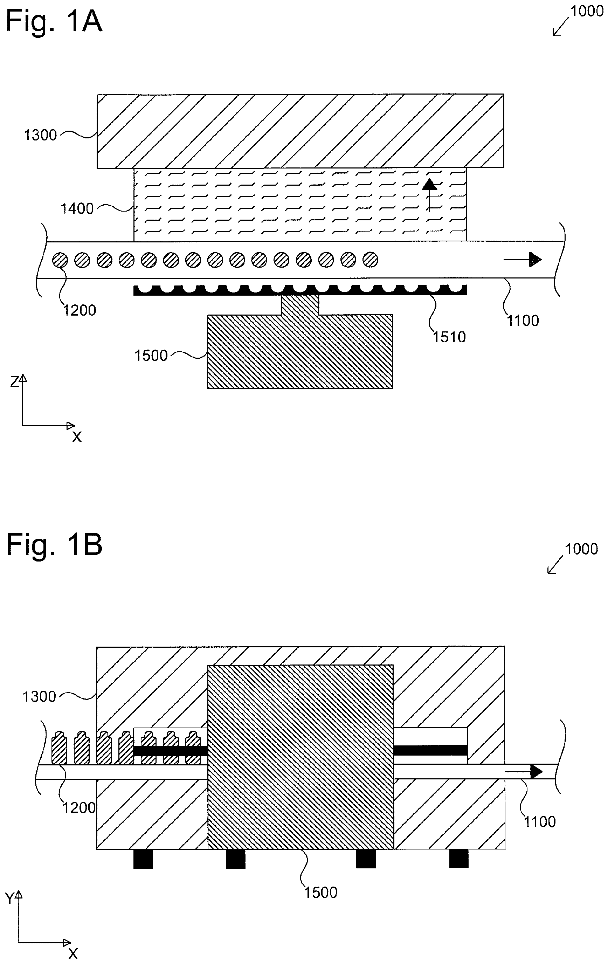

A schematic view of such a system is shown in Figures 1A-1D. In particular, Figure 1A shows a top view of a production system 1000, while Figure 1B shows a front view of the production system 1000.

The production system 1000 comprises a first conveyor belt 1100 on which a plurality of objects 1200 are placed, preferably hollow glass objects, even more preferably bottles. In the embodiment illustrated herein, the conveyor belt 1100 moves from left to right, as indicated by the arrow, but it is clear that the opposite movement is alternatively possible. The thermal stress relieving treatment is carried out inside an annealing furnace 1300. A second conveyor belt 1400 moves the objects 1200 inside the annealing furnace 1300, moving in a direction that is perpendicular to that of the first conveyor belt 1100, as shown by the arrow.

Since the first conveyor belt 1100 and the second conveyor belt 1400 move in perpendicular directions with respect to each other, it is necessary to move the objects 1200 from the first to the second conveyor belt. This movement is obtained by means of a handling device 1500.

In particular, the handling device 1500 comprises a thrust bar 1510 whose shape can substantially correspond to the external shape of the objects 1200, in such a way as to facilitate the movement of the same in the positive direction Z while at the same time maintaining the objects 1200 spaced from one another.

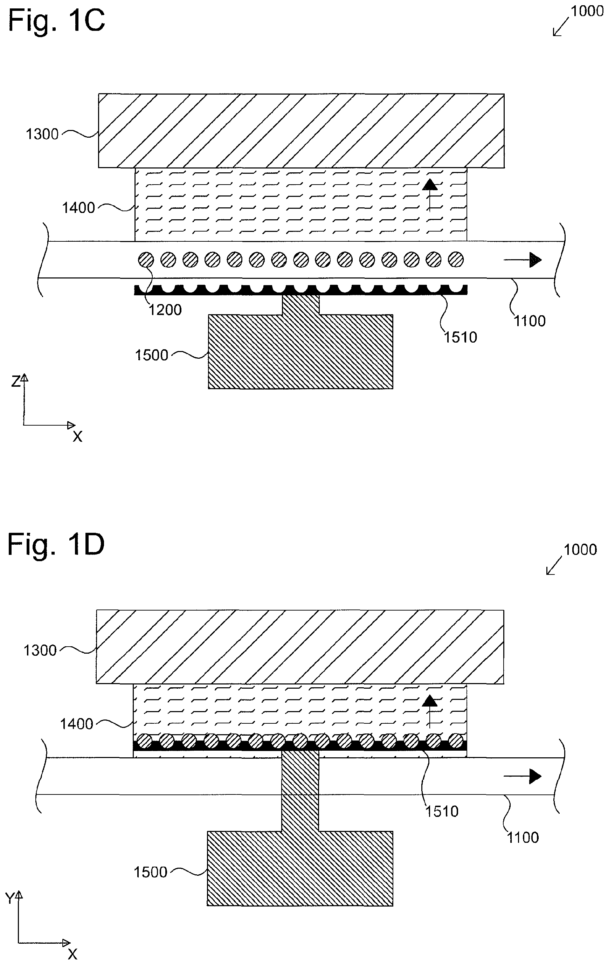

As can be seen in Figures 1C and 1D, when the objects 1200 are placed in front of the thrust bar 1510, the latter moves in the positive direction Z, moving the objects 1200 from the first conveyor belt 1100 towards the second conveyor belt 1400.

A first problem posed by the production system 1000 is due to the fact that, while the thrust bar 1510 thrusts the objects 1200 from the first conveyor belt 1100 towards the second conveyor belt 1400, it is not possible to position other objects 1200 in the operating area of the thrust bar 1510. This is due to the fact that the thrust bar 1510 would impact against said objects 1200 during its return movement in the negative direction Z.

This problem can be resolved by allowing the thrust bar to move not only in the direction Z, but also in the direction Y. In particular, after pushing the objects 1200 on the second conveyor belt 1400, the bar moves back passing beyond the objects that in the meantime have come to be positioned behind it.

A second problem is represented by the fact that it is difficult to prevent the objects 1200 from falling down during the grasping step performed by the thrust bar 1510, as the thrusting action exerted by the bar is orthogonal to the thrusting action of the conveyor belt 1100.

This problem can be resolved by allowing the thrust bar 1510 to move not only in the direction Z, but also in the direction X. In particular, if the thrust bar 1510 moves at a speed which is substantially equal to the speed of the first conveyor belt 1100, in the phase during which it approaches the objects 1200 it is possible to prevent them from falling down.

It is therefore preferable for the thrust bar 1510 to be able to move in the three directions X, Y and Z.

A handling device 1500 allowing the thrust bar 1510 to move in three axial directions is known, for example, as the lehr loader described in patent US 5,893,449.

In particular, the lehr loader described in patent US 5,893,449 comprises three carriages, each driven by a corresponding motor. The first carriage 48 can be moved in a first horizontal direction with respect to the supporting structure of the lehr loader. The second carriage 76 is mounted on the first carriage 48 and can be moved with respect to the latter in a second horizontal direction which is perpendicular to the first horizontal direction. The third carriage 94 is mounted on the second carriage 76 and can be moved in a vertical direction with respect to the latter. In this way, the thrust bar 120 can move along the three axes. The three movements of the three carriages are of the linear type.

Such an embodiment, however, poses several problems.

Using a carriage that performs a linear movement in a vertical direction, that is, the carriage 94, means occupying much space in the vertical direction, since for a movement of the carriage along a predefined distance Y it will be necessary to provide the carriage with a support whose height must be at least equal to the predefined distance Y.

Furthermore, the single arm 122 which connects the thrust arm 120 to the vertical carriage 94 may be bent and cause the objects loaded by the thrust arm 120 to vibrate and even to fall down.

Finally, the motor 98, which sets the carriage 94 moving in the vertical direction, needs to be positioned very near the carriage, and thus towards the annealing furnace 1300, which can damage the motor due to the heat emitted by the furnace. This last problem can be mitigated by lengthening the arm 122, however this solution worsens the problem previously described, as it makes the arm 122 even more flexible.

### SUMMARY OF THE INVENTION

An embodiment of the present invention can concern a device for handling objects, comprising: a fixed supporting structure, a first carriage connected in a movable manner along a first linear direction and/or a second carriage connected in a movable manner along a second linear direction and a third carriage connected in a movable manner along a curved direction, wherein the third carriage is connected as follows: between the fixed supporting structure and the first carriage, or between the first carriage and the second carriage, or to the second carriage.

Thanks to such an embodiment, it is possible to move the third carriage in the three directions, in any case overcoming the problems known in the state of the art. For example, the movement along the curved direction makes it possible to position an actuator advantageously far from the annealing furnace, for example closer to the axis of the curved trajectory. Furthermore, always for example, the movement along the curved direction facilitates the control algorithms of the device in the moment when, as it often happens, the third carriage needs to move along a curved direction, for example to pass beyond the objects during its return. In particular, the curved movement can be transmitted by means of a simple command and does not need to be obtained through the combination of two linear movements. Furthermore, always for example, the movement along the curved direction reduces the space occupied in the vertical direction, as there is no need for a second carriage that develops in this direction.

In some embodiments, the device may also comprise a connection suited to connect the third carriage to the second carriage, said connection comprising: a first arm and a second arm, wherein both the first arm and the second arm may comprise a first end connected to the second carriage and a second end connected to the third carriage.

Thanks to this embodiment, it is possible to obtain the movement along the curved direction in a simple manner. Furthermore, it is possible to obtain a connection with better rigidity than the solution known in the art, where a single arm supports the thrust arm and the objects.

In some embodiments, the connection can substantially be in the shape of a trapezium or a parallelogram.

Thanks to this embodiment, it is possible to obtain different types of movement along the curved direction, if necessary maintaining a fixed angle with respect to the vertical of the third carriage or controlling the variation of said angle.

In some embodiments, the device can also comprise at least one actuator, configured in such a way as to move the connection.

Thanks to this embodiment, it is possible to actuate the connection.

In some embodiments, the actuator may comprise a first point of actuation and a second point of actuation, and wherein: the first point of actuation can be connected to the second carriage and the second point of actuation can be connected to the third carriage, or wherein the first point of actuation can be connected to the second carriage and the second point of actuation can be connected to the connection, or wherein the first point of actuation can be connected to the connection and the second point of actuation can be connected to the third carriage, or wherein the first point of actuation can be connected to the second arm and the second point of actuation can be connected to the first arm.

Thanks to such an embodiment, it is possible to connect the actuator in several points, depending on the needs related to the overall dimensions and/or the connection of the actuator and/or depending on the type and size of the actuator. In some embodiments, the actuator can be configured in such a way as to control the distance between the first point of actuation and the second point of actuation. Thanks to such an embodiment, it is possible to make the actuator in a simple and effective manner.

In some embodiments, the actuator can be a pneumatic actuator, and/or a hydraulic actuator and/or an electric actuator and/or a mechanical actuator. Thanks to such an embodiment, it is possible to make the actuator with standard components.

In some embodiments, the actuator may comprise the following: a third arm having a first end and a second end, and a fourth arm having a first end and a second end, wherein the third arm and the fourth arm can be connected to each other through their respective second end to a connection pin; the actuator may also comprise: a motor, a worm screw connected to the motor and a bushing screwed to the worm screw, wherein the bushing can be connected to the connection pin, wherein the first point of actuation can be the first end of the fourth arm, and wherein the second point of actuation can be the first end of the third arm.

Thanks to such an embodiment, it is possible to make an actuator which converts a rotational movement of a motor into a linear movement of the end of the actuator.

In some embodiments, the actuator may comprise the following: a motor, a pinion actuated by the motor, if necessary through a transmission, and a crown gear actuated by the pinion and having a rotation pin integrally connected to a rotation pin of the first arm of the connection, and/or a crown gear actuated by the pinion and having a rotation pin integrally connected to a rotation pin of the second arm of the connection.

Thanks to such an embodiment, it is possible to make an actuator which is compact and easy to be integrated in pre-existing connections.

In some embodiments, the actuator may comprise the following: a motor, a crank actuated by the motor, a connecting rod actuated by the crank and having one end connected to a point of connection integral with the first arm or with the second arm of the connection.

Thanks to such an embodiment, it is possible to make an actuator which is compact and easy to be integrated in pre-existing connections.

### BRIEF DESCRIPTION OF THE DRAWINGS

Further characteristics and advantages of the invention are highlighted in greater detail in the following detailed description of preferred but not exclusive embodiments, described herein by way of non-limiting examples with the support of the attached drawings.

In the drawings, the same reference numbers identify the same components.

In particular:
- Figures 1A-1D show schematic views of a production system and a handling device according to the state of the art;
- Figures 2A, 2B and 2C respectively show a schematic top view, a schematic front view and a schematic side view of a handling device according to an embodiment of the present invention. Figure 2D shows a schematic side view of the handling device in a position different from that shown in Figures 2A, 2B and 2C;
- Figures 3-6 show schematic views of different handling devices according to different embodiments of the present invention;
- Figures 7A and 7B respectively show a schematic side view and a schematic top view of an actuator according to an embodiment of the present invention;
- Figures 8A and 8B schematically illustrate the application of the actuator of Figures 7A and 7B to the handling device shown respectively in Figure 6 and in Figure 4;
- Figures 9 and 10 show schematic side views of two actuators according to different embodiments of the present invention.

### DETAILED DESCRIPTION OF THE INVENTION

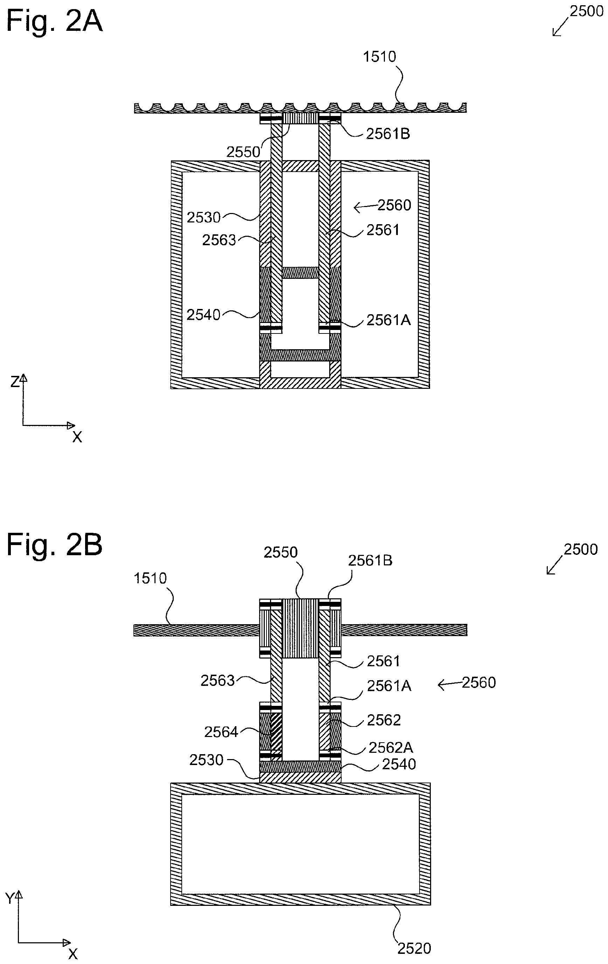

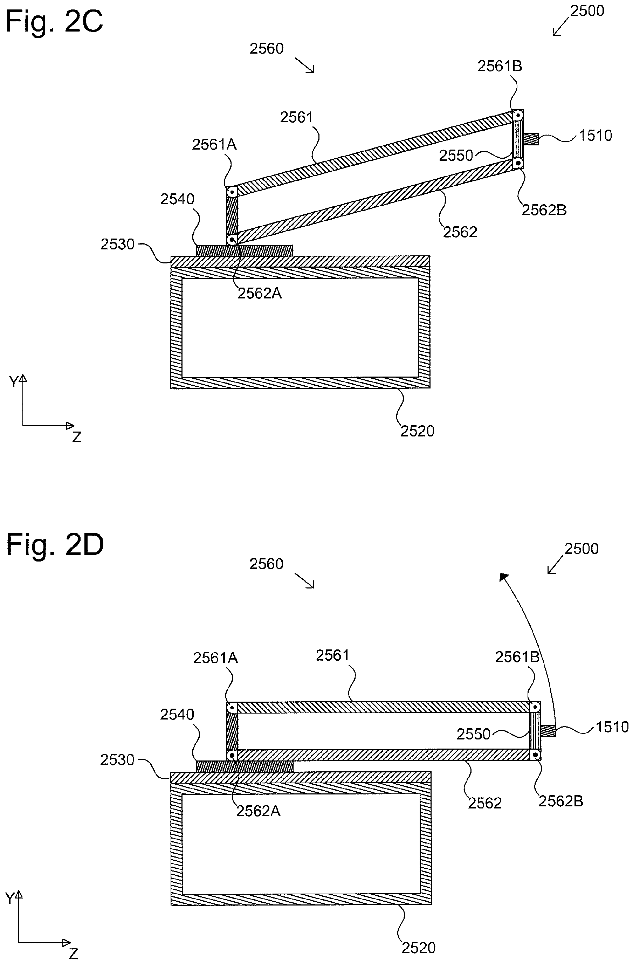

Figures 2A, 2B and 2C respectively show a schematic top view, a schematic front view and a schematic side view of a handling device 2500 according to an embodiment of the present invention. Figure 2D shows a schematic side view of the handling device 2500 in a position different from that shown in Figures 2A, 2B and 2C.

The handling device 2500 represents an improvement of the handling device 1500 known in the state of the art, for different reasons which will be clarified in the following description.

The handling device 2500 comprises a fixed supporting structure 2520 which serves as a support for the handling device 2500. For the sake of clarity, the fixed supporting structure 2520 is schematically illustrated as a structure substantially corresponding to the edges of a parallelepiped, it being understood, however, that different and/or more complex shapes are possible.

The handling device 2500 furthermore comprises a carriage 2530, connected to the fixed supporting structure 2520 in a movable manner along the linear direction X. The expression "connected in a movable manner along the linear direction X" means that the carriage 2530 can be moved with respect to the fixed supporting structure 2520 only along the linear direction X, for example by connecting the carriage 2530 and the fixed supporting structure 2520 by means of a system consisting of a sliding block and a guide, not illustrated herein for the sake of clarity.

The handling device 2500 furthermore comprises a carriage 2540, connected to the carriage 2530 in a movable manner along the linear direction Z. The expression "connected in a movable manner along the linear direction Z" means that the carriage 2540 can be moved with respect to the carriage 2530 only along the linear direction Z, for example by connecting the carriage 2540 and the carriage 2530 by means of a system consisting of a sliding block and a guide, not illustrated herein for the sake of clarity.

The movement of the carriage 2530 with respect to the fixed supporting structure 2520 and, analogously, the movement of the carriage 2540 with respect to the carriage 2530 can be obtained by means of any actuator, for example a hydraulic, pneumatic, or mechanical actuator, or a combination of these, for example an actuator with rack and pinion driven by an electric motor, not illustrated in Figures 2A-2D for the sake of clarity.

The carriages 2530 and 2540 can thus perform a movement of the linear type in the directions X and Z. It is understood that according to some embodiments it will be possible to make the handling device 2500 even without one or both of the carriages 2530, 2540, in the case where the movement of the device in one or both of the directions X and Z is not necessary.

The handling device 2500 furthermore comprises a carriage 2550, connected to the carriage 2540 in a movable manner along a curved direction, as schematically shown by the arrow in Figure 2D. The carriage 2550 is in turn connected to the thrust bar 1510, or forms an integral part of the latter.

In particular, the movement in the curved direction is transmitted by the shape of the connection 2560 between the carriage 2540 and the carriage 2550. Essentially, the connection 2560 has the shape of a trapezium, preferably the shape of a parallelogram, and comprises a first arm 2561 and a second arm 2562. In the embodiment illustrated herein, the arm 2561 and the arm 2562 are both present twice, respectively with the arms 2563 and 2564.

This type of embodiment advantageously makes it possible to reduce the flexibility of the connection 2560 and/or to reduce the weight of the connection 2560, given a fixed allowable flexibility level. It is understood, however, that the invention can be implemented even with a single arm 2561 and a single arm 2562. Although this variant is not illustrated for the sake of clarity, it will be possible to connect the arm 2561 to the arm 2563, in such a way as to increase the rigidity of the connection 2560, in the case where the arm 2563 is provided. A similar solution can be implemented also for the arms 2562 and 2564.

Even more specifically, both the first arm 2561 and the second arm 2562, and analogously the arms 2563 and 2564, comprise a first end 2561A, 2562A connected to the carriage 2540 and a second end 2561B, 2562B connected to the carriage 2550. The connection of the ends to the respective carriages can be obtained using any element suited to allow the end of the arm 2561, 2562 to rotate with respect to the corresponding carriage 2540, 2550, for example a ball joint, a bearing, a pin or a screw inserted in a corresponding hole.

Alternatively, or as an addition to the above, in a specific embodiment of the present invention the connection 2560 can substantially be in the shape of a parallelogram. In other words, the arm 2561 and the arm 2562 can be substantially parallel to each other and substantially have the same length. This advantageously makes it possible to obtain and arc-shaped movement of the carriage 2550, although maintaining the vertical axis of the thrust bar 1510 in a fixed direction with respect to the vertical axis Y. In turn, this makes it possible to safely handle the objects 1200, which on the other hand may fall down as a consequence of the rotation of the thrust bar 1510 in the case of an arc-shaped movement of the carriage 2550 caused by one arm 2561 only, instead of by the two arms 2561, 2562.

Alternatively, or as an addition to the above, in a specific embodiment of the present invention the connection 2560 can substantially be in the shape of a trapezium. In other words, the arm 2561 and the arm 2562 may not be parallel to each other. This type of embodiment causes a rotation of the carriage 2550 in space, however a smaller rotation than in the case of a connection having only one arm 2561. Furthermore, as will be clear to the expert in the art, this type of embodiment advantageously makes it possible to control the degree of rotation of the carriage 2550, in the cases where it is advantageous to carry out a rotation of the same.

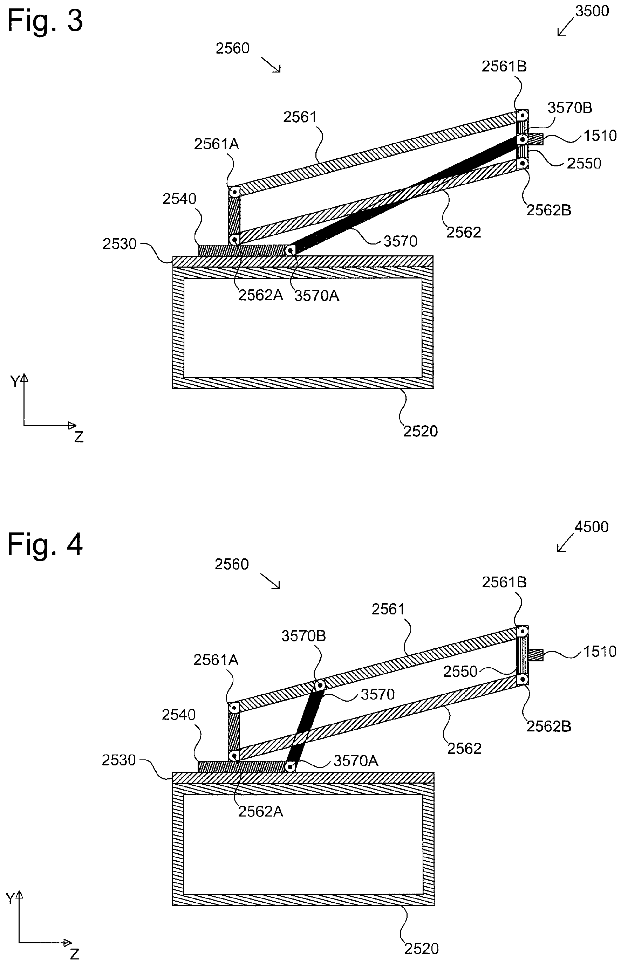

Figures 3-6 schematically show embodiments of different handling devices 3500-6500 which differ from the handling device 2500 due to the presence of an actuator 3570 configured in such a way as to move the connection 2560.

In particular, the actuator 3570 comprises a first point of actuation 3570A and a second point of actuation 3570B. The actuator 3570 can be a pneumatic, hydraulic, electric or mechanical actuator, or a combination of these. For example, the actuator 3570 can be a combination of a piston and a cylinder, or a linear motor, or even a rack system, or a system with a worm screw and a bushing joined to a lever system, etc. In general, the actuator 3570 is configured in such a way as to control the distance between the point of actuation 3570A and the point of actuation 3570B.

The points of actuation 3570A e 3570B can be connected to different points of the handling device 3500-6500. It will be clear to the expert in the art that the embodiments shown in Figures 3-6 are only some of the embodiments which are possible and suited to move the carriage 2550 and that alternative connections of the actuator 3570 are possible.

In Figure 3, the point of actuation 3570A is connected to the carriage 2540 and the point of actuation 3570B is connected to the carriage 2550. In this manner, when the actuator 3570 is extended, the carriage 2550 is moved along the curved direction indicated in Figure 2D, anticlockwise. This embodiment is advantageous because it offers precise control over the movement of the carriage 2550, as the ratio between the extension of the actuator 3570 and the movement of the carriage 2550 is reduced compared to other embodiments that are described below, for example with reference to Figure 4.

In Figure 4, the point of actuation 3570A is connected to the carriage 2540 and the point of actuation 3570B is connected to the connection 2560, for example to the arm 2561. Alternatively, the point of actuation 3570B may be connected to the arm 2562. In this manner, as the actuator 3570 is extended, the carriage 2550 is moved along the curved direction shown in Figure 2D, anticlockwise. With this embodiment it is advantageously possible to obtain a movement of the carriage 2550 with a reduced stroke of the actuator 3570, for example compared to the embodiment illustrated in Figure 3.

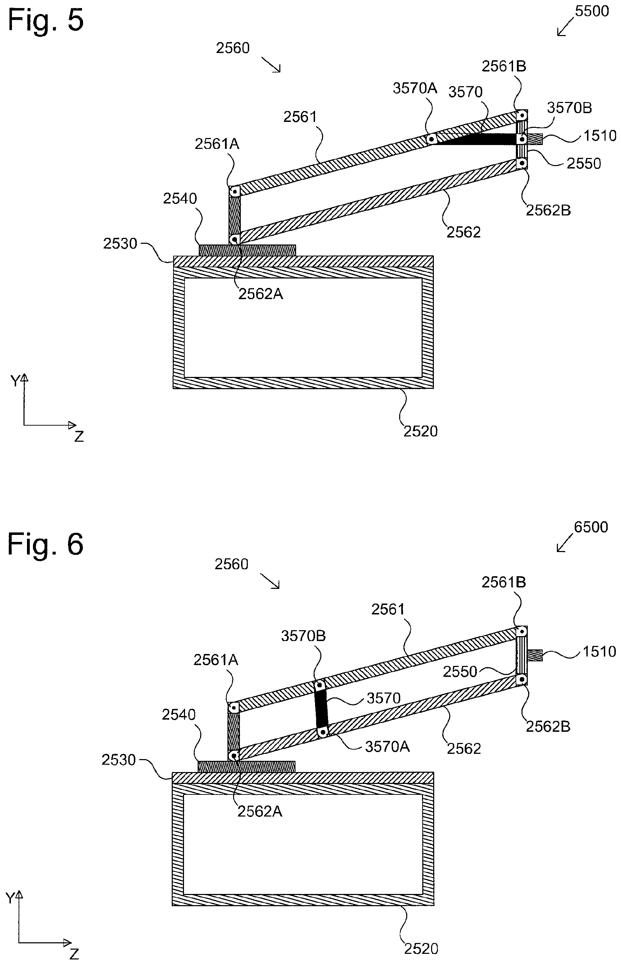

In Figure 5, the point of actuation 3570A is connected to the connection 2560, for example to the arm 2561, and the point of actuation 3570B is connected to the carriage 2550. Alternatively, the point of actuation may be connected to the arm 2562. In this manner, as the actuator 3570 is extended, the carriage 2550 is moved along the curved direction indicated in Figure 2D, anticlockwise. This embodiment can be advantageous as the actuator is positioned near the carriage 2550. For example, in the case where the actuator is controlled by a sensor placed in proximity to the carriage 2550, this position reduces the distance and the respective connection cable between the sensor and the actuator 3570.

In Figure 6, the point of actuation 3570A is connected to the arm 2562 and the point of actuation 3570B is connected to the arm 2561. In this manner, as the actuator 3570 is extended, the carriage 2550 is moved along the curved direction indicated in Figure 2D, anticlockwise. This embodiment can be advantageous in the case where, for any reason, it is not possible to connect the actuator to one of the two carriages 2540, 2550.

As previously described, the embodiments shown in Figures 3-6 cannot as a whole be considered an exhaustive representation of the possible connections between the actuator 3570 and the connection 2560. For example, in addition or as an alternative to the above, one or both of the points of actuation 3570A, 3570B can be defined on one of the ends 2561A, 2561B, 2562A, 2562B. For example, with reference to Figure 3, the point of actuation 3570B can be defined on the same rotation pin present at the end 2561B. In this manner, it is possible to reduce the number of components, as the end 2561B already has a connection with the carriage 2550, which allows a relative rotation of the two elements, for example a pin and the corresponding bearings. The connection of the actuator 3570 to the same pin, through a further bearing on the actuator 3570, makes it possible to reduce the number of components which are necessary to make the handling device 3500.

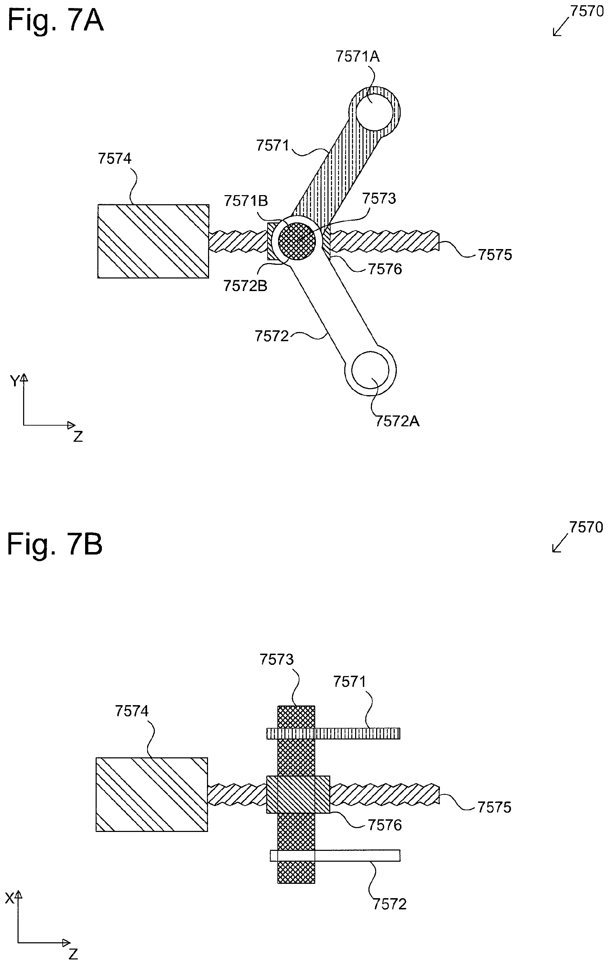

The previous description makes reference to a generic actuator 3570. Different specific embodiments of the actuator are described here below, in particular with reference to the embodiments illustrated in Figures 7A, 7B, 9 and 10.

Figures 7A and 7B respectively show a schematic side view and a schematic top view of an actuator with worm screw 7570 according to an embodiment of the present invention, which can be used, for example, as the actuator 3570.

In particular, the actuator with worm screw 7570 comprises an arm 7571 having a first end 7571A and a second end 7571B, and an arm 7572 having a first end 7572A and a second end 7572B. The arm 7571 and the arm 7572 are connected to each other at the level of their second end 7571B, 7572B, on a connection pin 7573, in such a way as to allow the two arms to rotate with respect to the connection pin 7573, for example by means of bearings. The actuator with worm screw 7570 furthermore comprises a motor 7574, connected to a worm screw 7575, the latter being screwed into a threaded bushing 7576. In some embodiments, the threaded bushing 7576 is integral with the connection pin 7573. In some embodiments, the threaded bushing 7576 is an integral part of the connection pin 7573.

As will be clear to the expert in the art, when the motor 7574 transmits a rotary motion to the worm screw 7575, the threaded bushing 7576 moves in the direction Z along the worm screw 7575, causing the movement of the connection pin 7573. The lever system constituted by the arms 7571 and 7572 thus changes its extension, and the actuator with worm screw 7570 can thus be used as described with reference to the actuator 3570.

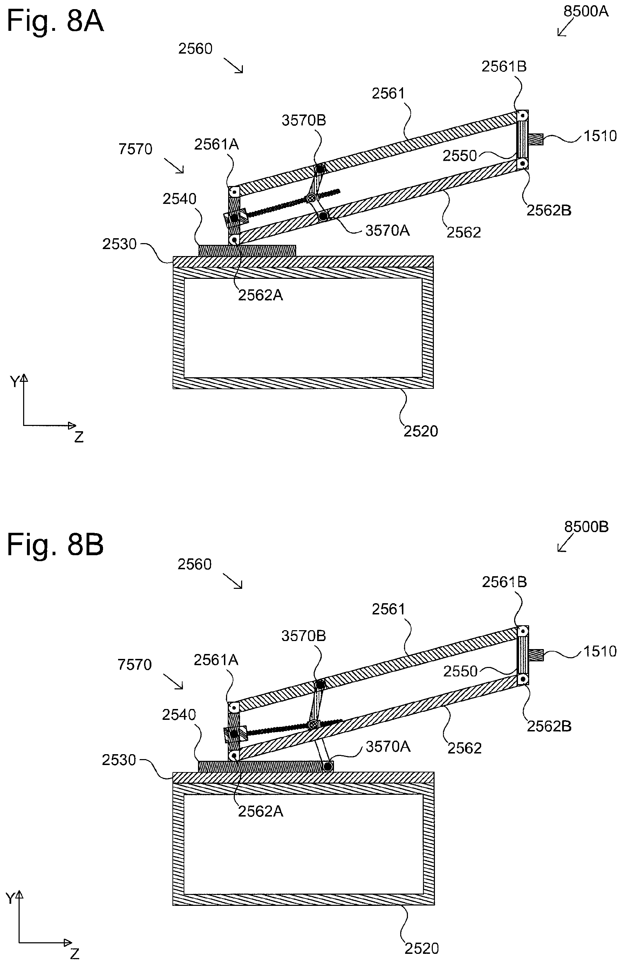

By way of example, Figure 8A shows a schematic side view of a handling device 8500 in which the actuator 7570 is used in a manner similar to the manner in which the actuator 3570 of Figure 6 is used. However, it will be clear that the actuator 7570 can be used in any of the configurations shown in Figures 3, 4, 5 or 6, or other configurations not illustrated herein. For example, when the actuator 7570 is used as shown in Figure 4, the end 7571A can be connected to the point of actuation 3570B while the end 7572A can be connected to the point of actuation 3570A, as shown in Figure 8B.

As can be seen in Figure 8A or 8B, the point of actuation 3750A corresponds to the first end 7572A of the arm 7572, while the point of actuation 3750B corresponds to the first end 7571A of the arm 7571. In the embodiment illustrated herein, the motor 7574 is connected to the carriage 2540, in particular between the coupling points of the ends 2561A and 2562A, although other connection points are possible. In particular, any connection is possible, provided that it allows the motor 7574 to rotate with respect to the axis X, in such a way as to follow the movement of the bushing 7576 transmitted by the connection 2560, and that it allows the motor to exert a force on the bushing 7576, in such a way as to activate the lever system formed by the arms 7571 and 7572.

One of the advantages offered by the use of the actuator 7570 lies in that the actuator 7570, being able to rotate on its coupling point, for example the point where it is coupled to the carriage 2540, remains coaxial with the bushing 7576, which is also able to rotate with respect to the arms 7571, 7572. In this way, independently of the position of the connection 2560, the actuator 7570 can exert an actuation force in the axial direction of the worm screw 7575.

Independently of the configuration used, which for example may be one of those illustrated in Figure 3, 4, 5 or 6, the actuator 7570 furthermore makes it possible to advantageously control with precision the position and the movement of the connection 2560. The worm screw 7575, in fact, allows the distance between the bushing 7576 and the motor 7574 to be controlled with great precision. At the same time, the motor 7574 can rotate very fast, in such a way as to rapidly move the connection 2560. Furthermore, as the positioning of the connection 2560 is carried out through a rotation of the motor 2540, for example an electric motor, it is advantageously possible to use a control of the type step-by-step, or any other control based on the rotation angle of the worm screw 7575.

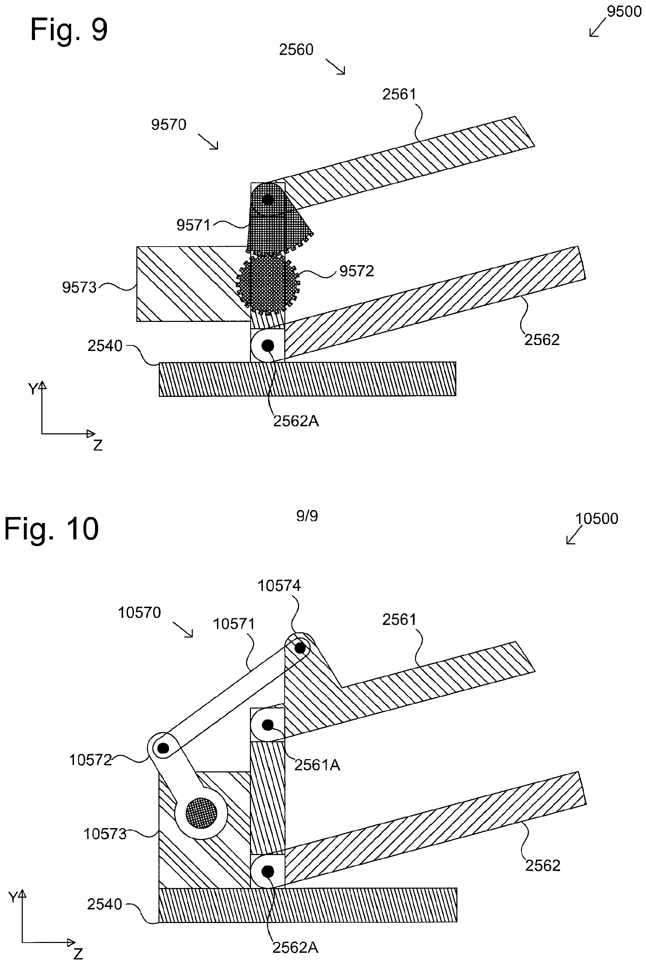

Figure 9 schematically shows a side view of parts of a handling device 9500 comprising an actuator with pinion and crown gear 9570. For the sake of clarity, only an enlargement of the region including the actuator 9570 has been represented.

The actuator 9570 comprises a pinion 9572 and a crown gear, or an arc of a crown gear 9571, actuated by the pinion 9572. The crown gear 9571 has its rotation pin connected in an integral manner to the rotation pin of the arm 2561 at the level of its end 2561A. The pinion is connected to and actuated by a motor 9573, if necessary through a transmission not illustrated herein, for example a bevel gear in the case where the axis of the motor is parallel to the direction Z. Through the rotary movement transmitted by the motor 9573, it is possible to rotate the pinion 9572 and, consequently, the crown gear 9571, thus causing the connection 2560 to move.

It is clear that the crown gear 9571 can also be arranged in such a way that its rotation pin is integrally connected to the rotation pin of the arm 2562 at its end 2562A. In alternative embodiments, it will also be possible to have a first crown gear 9571 connected to the arm 2561 and a second crown gear 9572 connected to the arm 2562, with the advantage of a distribution of the rotation moment between the pins at the ends 2561A and 2562A.

One of the advantages of the actuator 9570 lies in its simple construction and reduced overall dimensions. Differently from the actuators previously described, the overall dimensions of the actuator 9570 are essentially limited to the region of the carriage 2540. Furthermore, the limited number of components makes it economic to produce and particularly sturdy. A further advantage lies in the possibility to install the actuator 9570 on existing connections 2560 with a limited number of modifications to the connection 2560.

Figure 10 schematically shows a side view of parts of a handling device 10500 comprising an actuator with a connecting rod-crank mechanism 10570. For the sake of clarity, only an enlargement of the region including the actuator 10570 has been represented.

The actuator 10570 comprises a connecting rod 10571 and a crank 10572, connected to and driven by a motor 10573 on one side and connected to a point of connection 10574 integral with the arm 2561. Through the rotary movement transmitted to the crank 10572 by the motor 10573, it is thus possible to move the arm 2561, and consequently the connection 2560, by means of the connecting rod 10571. It is clear that, even if the connecting rod 10571 is connected to the arm 2561, a similar connection is also possible with the arm 2562.

One of the advantages offered by the actuator 10570 lies in its simple construction. Furthermore, the actuator can be easily adapted to already existing connections 2560, as the motor 10573 is generally positioned in a region usually clear of obstacles and the connection 10574 can be made on the arm 2561 through a simple welding operation, or a mechanical operation in a region of the arm 2561 usually free of obstacles, too.

The expert in the art is certainly aware that the embodiments previously described, or even only some elements of the same, can be combined to one another so as to obtain other embodiments of the present invention, which therefore must not be considered limited to the embodiments described and illustrated herein.

Furthermore, even if in the embodiments described herein the first carriage 2530 is connected to the fixed structure 2520, the second carriage 2540 is connected to the first carriage 2530 and the third carriage 2550 is connected to the second carriage 2540, the present invention is not limited to this configuration.

As already mentioned, it is possible to carry out embodiments in which there is only the third carriage 2550, connected to the fixed supporting structure 2520 with the corresponding connection 2560, movable along the curved direction. Analogously, it will be possible to connect the first carriage 2530 and/or the second carriage 2540 to the third carriage 2550, in a manner similar to that described with reference to their connection to the fixed supporting structure 2520. In other words, while the connection 2560 guarantees a movement of the third carriage 2550 along the curved direction, the first carriage 2530 and the second carriage 2540 may be connected to the third carriage 2550 in a movable manner along one or two linear directions.

Always by way of example, the first carriage 2530 may be connected to the fixed supporting structure 2520 in a movable manner along a linear direction, the third carriage 2550 may be connected to the first carriage 2530 along the curved direction by means of the connection 2560, while the second carriage 2540 may be connected to the third carriage 2550 in a movable manner along a linear direction.

More generally, the connection 2560 can be positioned between any two elements selected among the fixed supporting structure 2520, the first carriage 2530, the second carriage 2540 and the third carriage 2550. It is also clear that in a variant of the embodiment shown in Figure 8, for example, if the connection 2560 is connected on one side to the third carriage 2550 and on the other side to the fixed supporting structure 2520, instead of to the second carriage 2540, the ends 2561A, 2562A will be connected to the fixed supporting structure 2520, as well as the point of actuation 3570A.

## Claims

1. Device for handling objects, comprising:
- a fixed supporting structure (2520),
- a first carriage (2530), connected in a movable manner along a first linear direction (X), and/or
- a second carriage (2540), connected in a movable manner along a second linear direction (Z),
**characterized by** a third carriage (2550), connected in a movable manner along a curved direction, wherein the third carriage (2550) is connected:
- between the fixed supporting structure (2520) and the first carriage (2530); or
- between the first carriage (2530) and the second carriage (2540); or
- to the second carriage (2540).

2. Device according to claim 1, further comprising a connection (2560) connecting the third carriage (2550) to the second carriage (2540), the connection (2560) comprising:
- a first arm (2561), and
- a second arm (2562),
**wherein** each one of the first arm (2561) and the second arm (2562) comprises:
- a first end (2561A, 2562A) connected to the second carriage (2540), and
- a second end (2561B, 2562B) connected to the third carriage (2550).

3. Device according to claim 2, wherein the connection(2560) has substantially the shape of a trapezium or a parallelogram.

4. Device according to claim 2 or 3, further comprising at least one actuator (3570) configured in such a way as to move the connection.

5. Device according to claim 4, wherein the actuator (3570) comprises a first point of actuation (3570A) and a second point of actuation (3570B), and **wherein:**
- the first point of actuation (3570A) is connected to the second carriage (2540) and the second point of actuation (3570B) is connected to the third carriage (2550),
- or wherein the first point of actuation (3570A) is connected to the second carriage (2540) and the second point of actuation (3570B) is connected to the connection (2560),
- or wherein the first point of actuation (3570A) is connected to the connection (2560) and the second point of actuation (3570B) is connected to the third carriage (2550),
- or wherein the first point of actuation (3570A) is connected to the second arm (2562) and the second point of actuation (3570B) is connected to the first arm (2561).

6. Device according to claim 5, **wherein** the actuator (3570) is configured in such a way as to control a distance between the first point of actuation (3570A) and the second point of actuation (3570B).

7. Device according to any of the claims from 4 to 6, **wherein** the actuator (3570) is a pneumatic actuator and/or a hydraulic actuator and/or an electric actuator, and/or a mechanical actuator.

8. The device according to any of the claims from 4 to 6, **wherein** the actuator (7570) comprises:
- a third arm (7571) having a first end (7571A) and a second end(7571B), and
- a fourth arm (7572) having a first end (7572A) and a second end (7572B), wherein the third arm (7571) and the fourth arm (7572) are connected to each other by means of their respective second end (7571B, 7572B) to a connection pin (7573),
- the actuator furthermore comprising:
- a motor (7574),
- a worm screw (7575) connected to the motor (7574), and
- a bushing (7576) screwed on the worm screw (7575),
wherein the bushing (7576) is connected to the connection pin (7573), wherein the first point of actuation (3570A) is the first end (7572A) of the fourth arm (7572), and wherein the second point of actuation (3570B) is the first end (7571A) of the third arm (7571).

9. Device according to claim 4, **wherein** the actuator (9570) comprises:
- a motor (9573),
- a pinion (9572) actuated by the motor (9573), possibly through a transmission, and
- a crown gear (9571) actuated by the pinion (9572), whose rotation pin is integrally connected to a rotation pin of the first arm (2561) of the connection (2560), and/or
- a crown gear (9571) actuated by the pinion (9572), whose rotation pin is integrally connected to a rotation pin of the second arm (2562) of the connection (2560).

10. Device according to claim 4, **wherein** the actuator (10570) comprises:
- a motor (10573),
- a crank (10572) actuated by the motor (10573),
- a connecting rod (10571) actuated by the crank (10572) and having one end connected to a connection point (10574) which is integral with the first arm (2561) or the second arm (2562) of the connection (2560).
